# EUROPEAN PATENT APPLICATION

(11) **EP 3 482 813 A1**
(43) Date of publication of application: **15.05.2019**
(21) Application number: 17201374.0
(22) Date of filing: 13.11.2017
(51) Int. Cl.: B01D 53/04, B01D 53/62, B01D 53/82

(54) **DEVICE FOR EFFECTIVE CAPTURING AND CONCENTRATION OF CO2 FROM GASEOUS STREAMS IN A RADIAL BED ADSORBER**

(71) Applicant: ANTECY, 3871 KM Hoevelaken (NL)
(72) Inventor: O'Connor, Paul, 3871KM Hoevelaken (NL); Marinic, Sasa, 3892AC Zeewolde (NL); Babich, Igor, 7545 GM Enschede (NL); van Putten, Gerrit, 3825 VT Amersfoort (NL)

(57) **Abstract**

A device for the effective capturing and concentration of CO2 comprising a tubular, ring shaped compartment containing a solid sorbent capable of capturing CO2 from a gaseous stream, preferably air, wherein a gaseous stream is preferably introduced in the inner part of the said compartment, and flows through the said compartment.

## Description

### Brief description of drawings

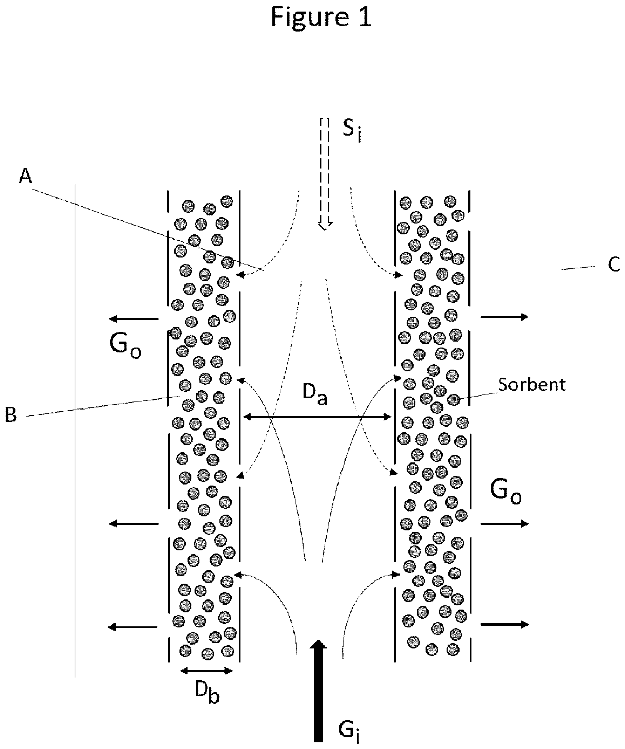

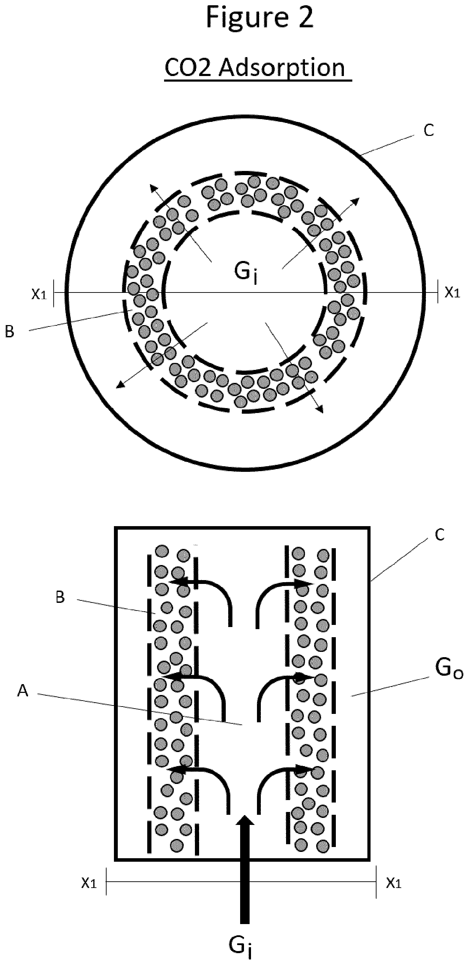

A gaseous stream containing CO₂ [see figure 1, inlet Gᵢ] is introduced in the inner circle of the compartment for adsorption [depicted as A, figure 1] and flows through the ring shaped compartment filled with a CO₂ sorbent [figure 1, B] to the outer ring [figure 1, C]. Where gaseous stream with depleted CO₂ level exits the compartment on the outer circle of the ring [figure 1, G₀].

Diameter of the inner space [defined as Dₐ in figure 1] is preferably at least 2 times thickness of the ring [defined as D_{b} in figure 1].

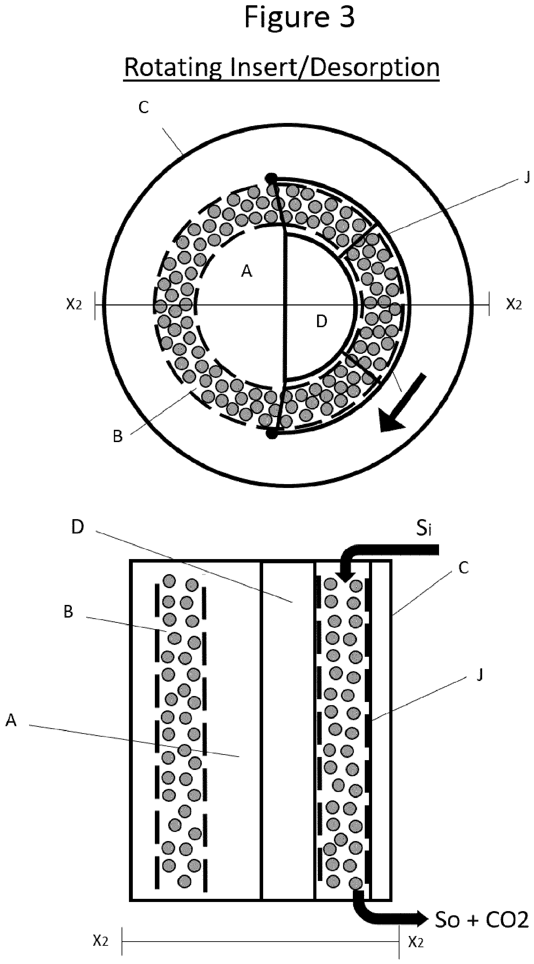

When desorbing, steam is introduced via the inlet Sᵢ [figure 3] during which step CO₂ is desorbed and together with steam exits the ring [defined as Sₒ + CO₂, figure 3].

During desorption step an insert [see D, figure 3] is introduced in the inner space A to reduce the volume of the inner space. Simultaneously a jacket [see J, figure 3] is placed at the outer edge of the sorbent containing compartment to prevent cross sectional flow. Steam is introduced in compartment B directly by means of inlet Si and evacuated in the opposite side of the ring.

To anticipate and prevent condensation of steam on the sorbent, this process might require a preheating step which can be done by means of electrical heating. For the same reason the process may require reduced pressure, resulting in the fact that materials and construction are chosen accordingly.

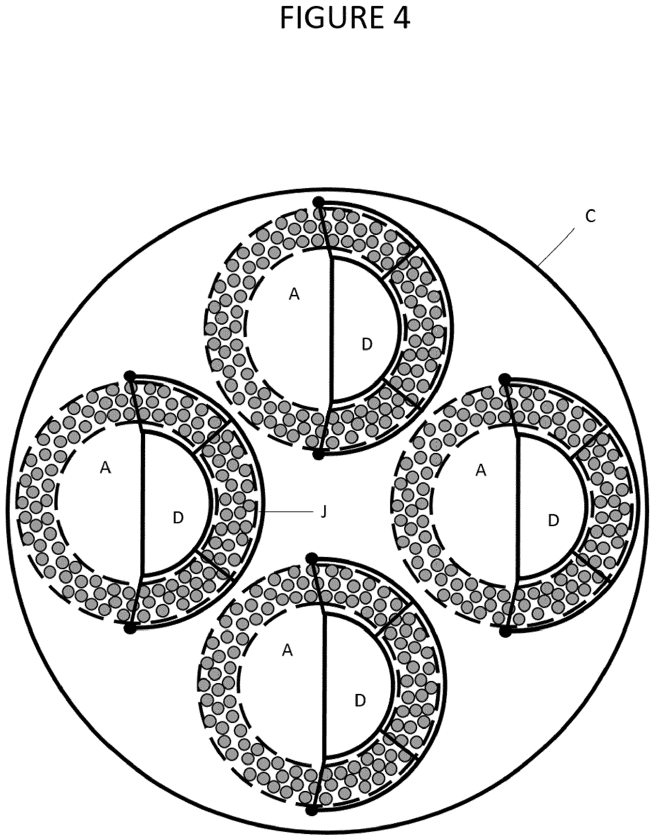

One or more adsorption compartments can be placed in one vessel to minimise the cost of the installation. [see figure 4].

The insert and the outer jacket can rotate simultaneously to facilitate continuous process.

### Description of embodiments

There is a need for a cost-effective process to capture and concentrate CO₂ from gaseous streams such as combustion flue gases, tail gases and air.

The capturing of CO₂ can be performed making use of a liquid and/or solid sorbent.

When dealing with large flows of gasses, especially in the case of air, it is of great importance to minimise the pressure drop and optimize the mass transfer at relatively high gas velocities.

It has been found that mass transfer in solid-gas systems is superior to liquid gas systems where the mass transfer efficiency is significantly lower, often because of the formation of gas bubbles.

Therefore for this invention a solid sorbent is utilized in a solid-gas contacting device.

Higher gas velocities allow a lower surface area, so hence a reduced footprint and cost of the equipment.

It is hence of great importance to develop a device where gaseous streams can be contacted with a solid sorbent at relatively high velocities while ensuring a low pressure drop and a good gas-solid mass transfer.

Further advantages of claimed technology:
Lower pressure drop [Delta P] and hence energy consumption lead to improved separation efficiency of CO₂ from air and faster adsorption/desorption cycles.

### Background art

Prior art regarding CO₂ capturing see: GEORGE A. OLAH ET AL: " Anthropogenic Chemical Carbon Cycle for a Sustainable Future", Journal of the American Chemical Society (JACS), March 23, 2011, dx.doi.org/10.1021/ja202642y

US3511595 [FUCHS] [US], 12 May 1970 (12.05.1970).

US7378561 [OLAH et al.] [US], 27 May 2008 (27.05.2008).

NAOYA SHIGEMOTO ET AL: "Material Balance and Energy Consumption for CO2 Recovery from Moist Flue Gas Employing K2CO3-on-Activated Carbon and Its Evaluation for Practical Adaption", Energy & Fuels 2006, 20, 721 - 726, received August 12, 2005, 10.1021/ef058027x

Prior art regarding the rotating system see: WO2015/006268 [EXXONMOBIL RESEARCH AND ENGINEERING COMPANY] [US], 15 January 2015 (15.01.2015).

US2014/0134553 [MASSACHUSETTS INSTITUTE OF TECHNOLOGY] [US], 15 May 2014 (15.05.2014).

US2005/0132881 [BAKSH et al.], 23 June 2005 (23.06.2005).

EP2502665 [MUNSTERS CORPORATION] [US], 26 September 2012 (26.09.2012) .

Prior art CLIMEWORKS: WO2017/009241 [CLIMEWORKS AG] [CH], 19 January 2017 (19.01.2017).

WO2010/091831 [ETH ZURICH] [CH], 19 August 2010 (19.08.2010).

US2017/0106330 [CLIMEWORKS AG] [CH], 20 April 2017 (20.04.2017).

US2016/0074803 [CLIMEWORKS AG] [CH], 17 March 2016 (17.03.2016).

Prior art VTT Technical Research Centre, "Creating Hydrocarbon Fuels with Solar Power and CO2", 09 June, 2017 (09.06.2017), http://www.cleantechconcepts.com/2017/06/creating-hydrocarbon-fuels-with-solar-power-and-co2/

Prior art Antecy, WO2014012963 [ANTECY B.V.] [NL], 23 January 2014 (23.01.2014) .

WO2014012966 [ANTECY B.V.] [NL], 23 January 2014 (23.01.2014).

WO2015071443 [ANTECY B.V.] [NL], 21 May 2015 (21.05.2015).

WO2015082567 [ANTECY B.V.] [NL], 11 June 2015 (11.06.2015).

WO2016050944 [ANTECY B.V.] [NL], 7 April 2016 (07.04.2016).

WO2017148782 [ANTECY B.V.] [NL], 08 September 2017 (08.09.2017).

## Claims

1. A device for the effective capturing and concentration of CO₂ comprising a tubular, ring shaped compartment containing a solid sorbent capable of capturing CO₂ from a gaseous stream.

2. The said device from claim 1 wherein a gaseous stream is introduced in the inner part of the said compartment, and flows through the said compartment.

3. The said device from claims 1 and 2 wherein one or more CO₂ adsorbing compartments are placed inside one vessel.

4. The said device from claims 1 to 3 wherein gaseous streams coming from the said compartment are vented from the vessel wherein the said compartment is placed.

5. Claim 1 wherein the compartment is a porous solid carpet capable of capturing CO₂ from the gaseous stream.

6. Claims 1 to 5 where the gaseous stream is air.

7. The said device from claims 1 to 3 in which the following process is performed:
Step 1) gas is flowing through the compartment from inside out during the adsorption of CO₂.
Step 2) temperature and humidity are increased, pressure reduced and steam injected in order to desorb CO₂.
Step 3) temperature and humidity from Step 2 are decreased where after Step 1 commences.

8. The said device from claims 1 to 7 wherein desorption is performed in a down flow.

9. The said device from claims 1 to 7 wherein desorption stream is introduced directly into the space between inner and outer circle of the ring shaped compartment.

10. The said device from claim 7 wherein during the desorption step an insert is used to prevent gasses flowing through the inner circle and to drive out residual gases and to reduce the dead space.

11. Claims 7 to 9 wherein the said insert can be rotated.

12. The said device from claims 1-11 in which the process takes place in a fractional desorption mode, separating the desorbed fractions according to their purity.

13. The said device from claims 1-12 in which a nitrogen cushion is applied between the CO₂ adsorption section (from air) and the desorption section in order to purge residual gasses from the said sorbent material.

14. The said device from claims 1-13 in which the sorbent is a non-amine material, for instance a potassium carbonate.

15. The said device from claims 1-14 in which the adsorption/desorption process is operated in a continuous mode.
